(19) **Europäisches Patentamt / European Patent Office / Office européen des brevets**

(11) **EP 2 158 657 B1**

(12) **FASCICULE DE BREVET EUROPEEN**

(45) Date de publication et mention
de la délivrance du brevet:
**01.09.2010 Bulletin 2010/35**

(21) Numéro de dépôt: **08736452.7**

(22) Date de dépôt: **22.04.2008**

(51) Int Cl.:
$H02J\ 3/18^{(2006.01)}$

(86) Numéro de dépôt international:
**PCT/EP2008/054847**

(87) Numéro de publication internationale:
**WO 2008/132094 (06.11.2008 Gazette 2008/45)**

(54) **SYSTEME ET PROCEDE DE CONTROLE D'UN TCSC DANS UN RESEAU DE TRANSPORT D'ENERGIE ELECTRIQUE NOTAMMENT PAR UNE APPROCHE MODES GLISSANTS**

STEUERSYSTEM UND VERFAHREN FÜR EINE TCSC IN EINEM ELEKTRISCHEN ENERGIETRANSPORTNETZ INSBESONDERE UNTER VERWENDUNG EINES SLIDING-MODES-ANSATZES

CONTROL SYSTEM AND METHOD FOR A TCSC IN AN ELECTRIC ENERGY TRANSPORT NETWORK IN PARTICULAR USING A SLIDING-MODES APPROACH

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.04.2007 FR 0754659**

(43) Date de publication de la demande:
**03.03.2010 Bulletin 2010/09**

(73) Titulaire: **AREVA T&D SAS**
**92084 Paris La Défense Cedex (FR)**

(72) Inventeurs:
- **BENCHAIB, Abdelkrim**
  **F-78180 Montigny Le Bretonneux (FR)**
- **POULLAIN, Serge**
  **F-92190 Meudon (FR)**
- **WEILER, Yannick**
  **F-75013 Paris (FR)**

(74) Mandataire: **Ilgart, Jean-Christophe et al**
**BREVALEX**
**3, rue du Docteur Lancereaux**
**75008 Paris (FR)**

(56) Documents cités:
**US-A- 5 621 305**

- **G. ESCOBAR, P. MATTAVELLI, R, ORTEGA: "A comparative study of the tree nonlinear controllers for TCSC" 2001 IEEE PORTO POWER TECH CONFERENCE, 10 septembre 2001 (2001-09-10), - 13 septembre 2001 (2001-09-13) XP002460602 Porto Portugal cité dans la demande**
- **G. ESCOBAR, P. MATTAVELLI, R, ORTEGA: "ON THE NONLINEAR CONTROL OF TCSC" PROCEEDING OF THE 35TH HAWAII INTERNATIONAL CONFERENCE ON SYSTEM SCIENCES, 2002, XP002460603**

**Description**

**DOMAINE TECHNIQUE**

L'invention concerne un système et un procédé de contrôle d'un TCSC dans un réseau de transport d'énergie électrique notamment par une approche modes glissants.

**ÉTAT DE LA TECHNIQUE ANTÉRIEURE**

L'accroissement continuel de la demande en électricité sature les grands réseaux de transport et de distribution d'énergie. L'ouverture totale du marché de l'électricité en Europe, d'une importance certaine sur le plan économique, soulève cependant bon nombre de problèmes, et montre notamment l'importance de l'interconnexion des grands réseaux, les réseaux moins sollicités pouvant ainsi soutenir ceux qui sont plus chargés. Les grands « black-out » (effondrement du réseau ou perte de synchronisme) survenus aux Etats-Unis et en Europe (Italie) au cours de l'été 2003 suite à une très forte demande en énergie ont fait prendre conscience aux opérateurs de la nécessité de développer les réseaux parallèlement à l'évolution de la demande. La maximisation du transfert de puissance devient dès lors une nouvelle contrainte à prendre en compte. La gestion et le contrôle des unités de production, la régulation, les capacités variables à interrupteurs mécaniques ont été les premières méthodes utilisées pour le contrôle du flux de puissance. Cependant, il existe des applications nécessitant un contrôle continu qui serait impossible avec de telles méthodes. Les systèmes FACTS (« Flexible Alternative Current Transmission System ») offrent une réponse adéquate à ces nouvelles exigences, en contrôlant la puissance réactive. Parmi ceux-ci, le TCSC (« Thyristor Controled Series Capacitor ») reste, malgré les récentes avancées technologiques, la solution offrant le meilleur compromis entre les critères économiques et techniques. Il permet en plus du contrôle de la puissance réactive, l'accroissement de la stabilité du réseau, notamment face à l'apparition de phénomènes de résonance hyposynchrone.

Principe du transfert de puissance

Dans un réseau de transport d'énergie, l'électricité est produite par des alternateurs en courant alternatif triphasé, puis la tension est augmentée par des transformateurs élévateurs très haute tension avant d'être transmise sur le réseau. La très haute tension permet de transporter l'énergie sur de longues distances, tout en allégeant les structures et en minimisant les pertes par échauffement. Elle reste cependant limitée par des contraintes d'isolement des équipements et par des phénomènes de rayonnement électromagnétique. Le niveau de très haute tension offrant un bon compromis va de 400 kV à 800 kV.

Pour que la puissance puisse transiter entre une source et un récepteur, il faut que la tension de la source soit déphasée d'un angle θ par rapport à la tension du récepteur. Cet angle θ est appelé angle interne de la ligne ou angle de transmission.

En notant Vs la tension côté source, Vr la tension côté récepteur, et X1 l'impédance purement inductive de la ligne, les puissances active P et réactive Q fournies par la source ont respectivement pour expressions :

$$P = \frac{V_s V_r}{X1} \sin\theta \qquad Q = \frac{V_s^2 - V_s V_r \cos\theta}{X1} \qquad P_{max} = \frac{V_s V_r}{X1}$$

Ces expressions montrent que les puissances active et réactive transmises sur une ligne inductive sont fonction des tensions Vs et Vr, de l'impédance X1 et de l'angle de transmission θ.

Pour augmenter la puissance transmissible par la ligne, on peut donc agir de trois façons :

- Augmenter les tension Vs et Vr. On est alors vite limité par les distances d'isolement et le dimensionnement de l'installation. Le champ électromagnétique rayonné est plus important. Il y a donc un impact environnemental à prendre en compte. De plus le matériel est plus cher et la maintenance coûteuse.
- Agir sur l'angle de transmission θ. Cet angle est fonction de la puissance active fournie par les sites de production. L'angle maximal correspondant à $P_{max}$ est θ = π/2. Pour des angles supérieurs, on entre dans la partie descendance de la courbe P=f(θ), qui est une zone instable. Travailler avec des angles θ trop importants c'est risquer de perdre le contrôle du réseau, notamment dans le cas d'un défaut transitoire (par exemple mise à la terre des phases) sur le réseau où le retour à un fonctionnement normal entraîne une augmentation transitoire de l'angle de transmission (afin d'évacuer l'énergie produite pendant le défaut qui n'a pu être utilisée par la charge et a été emmagasinée sous forme d'énergie cinétique dans les rotors des générateurs). Il est alors impératif que cet angle ne dépasse pas la limite de stabilité.

- Agir sur la valeur de l'impédance X1 que l'on peut faire baisser en plaçant un condensateur en série avec la ligne, compensant ainsi la puissance réactive générée par la ligne de transport d'énergie. La valeur de l'impédance X1 baissant, la puissance transmissible augmente pour un même angle de transmission. Les FACTS série sont des dispositifs qui permettent de réaliser cette fonction de compensation d'énergie réactive. Parmi les FACTS série, le FC (« Fixed Capacitor ») est le plus répandu. Cependant, il ne permet pas un réglage du degré de compensation. Si un tel réglage est requis, il est alors possible de faire appel à un système TCSC.

Utilisation des FACTS série pour la compensation de puissance réactive

L'utilisation des FACTS ouvre de nouvelles perspectives pour une exploitation plus efficace des réseaux électriques par action continue et rapide sur les différents paramètres du réseau : déphasage, tension, impédance. Ainsi, les transferts de puissance sont mieux contrôlés et les tensions mieux tenues, ce qui permet d'augmenter les marges de stabilité et de tendre vers une exploitation des lignes de transport d'énergie par un transfert de courant maximum à la limite de la tenue thermique de ces lignes à haute et très haute tension.
Les FACTS peuvent être regroupés en deux familles : les FACTS parallèles et les FACTS série :

- Les FACTS parallèles regroupent notamment le MSC (« Mechanical Switched Capacitor »), le SVC (« Static Var Compensator ») et le STATCOM (« STATIC synchronous COMPensator »).
- Les FACTS série regroupent notamment le FC (« Fixed Capacitor »), le TSSC (« Thyristor Switched Serie Capacitor »), le TCSC (« Thyristor Controlled Serie Capacitor »), et le SSSC (« Static Synchronous Serie Compensator »).

La forme la plus élémentaire de FACTS série consiste en un simple condensateur (FC) placé en série sur la ligne de transmission. Ce condensateur compense une partie de l'inductance de la ligne. En notant Xc l'impédance de ce condensateur, et en négligeant la résistance des câbles, la puissance transmise par la ligne compensée s'écrit :

$$P = \frac{V_s V_r}{Xl - Xc} \sin \theta$$

En notant $kc = \dfrac{Xc}{Xl}$, le taux de compensation de la ligne, l'expression précédente devient :

$$P = \frac{V_s V_r}{Xl(1 - kc)} \sin \theta$$

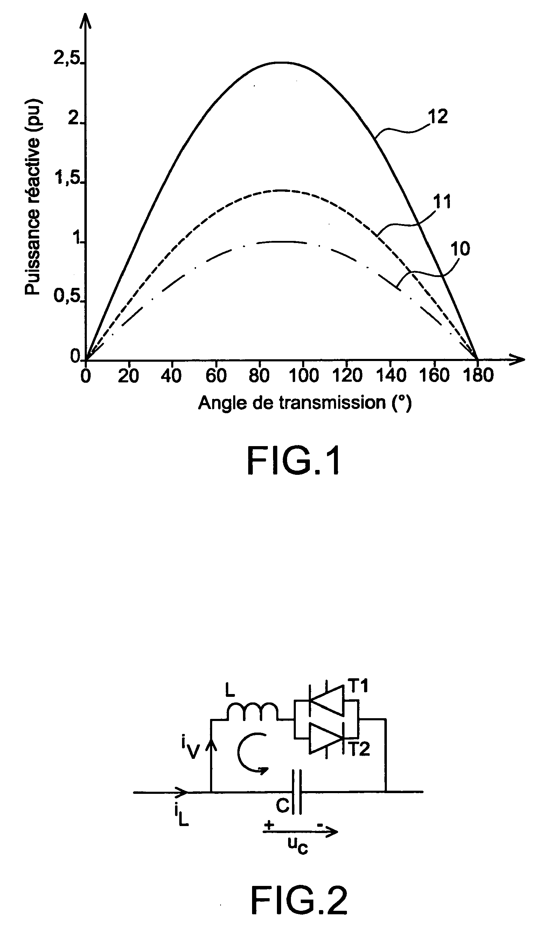

La figure 1 montre l'évolution de la puissance active en fonction de l'angle de transmission pour trois valeurs différentes du taux de compensation : 0% (courbe 10), 30% (courbe 11), et 60% (courbe 12). L'amélioration apportée par la compensation série est nettement visible. En effet, le taux de compensation agit directement sur la valeur $P_{max}$. Ainsi, plus le taux de compensation est élevé, plus la puissance transmissible est importante ou plus l'angle de transmission est faible pour une même puissance transportée. De plus, l'augmentation de la puissance transmissible permet, par un accroissement de la marge de stabilité (i.e. marge de puissance active disponible avant l'angle critique de stabilité), d'améliorer la stabilité globale du réseau en cas de défaut transitoire sur la ligne de transport d'énergie.
Cependant, l'association de condensateurs, de capacité fixée et constante, avec l'inductance de la ligne de transport forme un système résonant peu amorti. Dans certains cas particuliers, notamment dans celui d'un retour à un fonctionnement normal consécutif à un défaut sur la ligne de transport, ce système résonant peut se mettre à osciller à travers un échange d'énergie avec le système mécanique résonant constitué des masses et arbres des turbines des générateurs. Ce phénomène d'échanges d'énergie (plus connu sous le nom de « résonance sub-synchrone » ou SSR pour « Sub-Synchronous Resonance ») se traduit par des oscillation de puissance (et donc de couple électromagnétique) de fortes amplitudes, pouvant, dans certains cas, entraîner la rupture des arbres mécaniques des parties tournantes des générateurs.

Pour amortir ces oscillations de puissance, on peut alors avoir recours à un condensateur série commandable ou CSC (« Controlable Series Capacitor ») pour amortir artificiellement ces oscillations par un contrôle actif de la réactance capacitive insérée (et donc de l'impédance). L'équipement adéquat pour l'amortissement des oscillations de puissance utilise des thyristors pour contrôler cette réactance. Le dispositif le plus communément utilisé est le condensateur série commandé par thyristors, ou TCSC, qui offre une bonne solution aux problèmes de stabilité des réseaux, et est l'un des FACTS les moins coûteux.

Utilisation des TCSC pour la compensation de puissance réactive

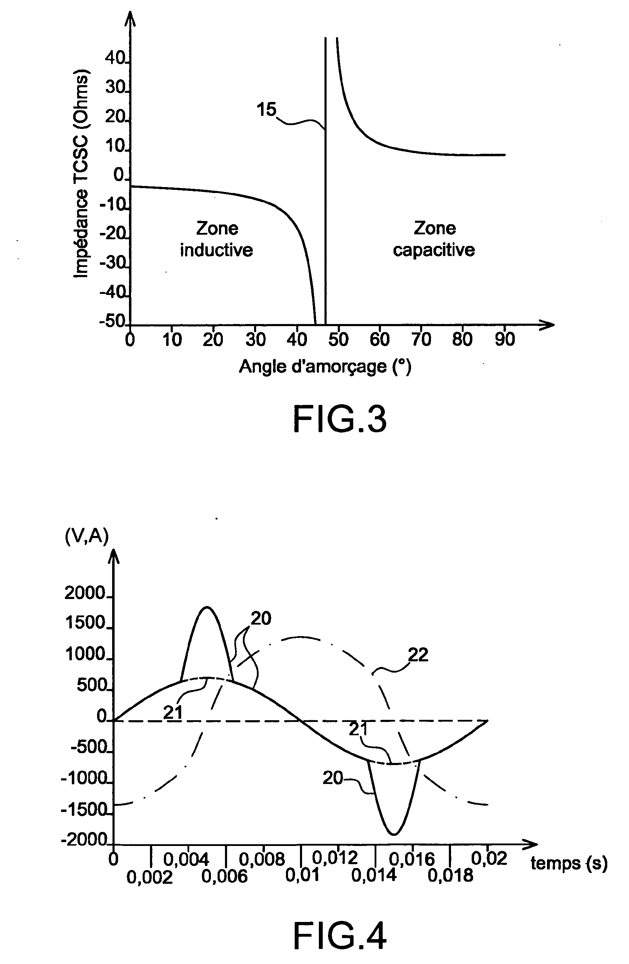

Comme illustré sur la figure 2, un TCSC est constitué de deux branches parallèles. La première comprend deux thyristors T1 et T2 branchés tête-bêche en série avec une inductance L. Cette branche est appelée TCR ou « Thyristor Controlled Reactor » pour inductance contrôlée par thyristor qui peut être comparée à une inductance variable. La seconde branche ne contient qu'un condensateur C. L'inductance variable, montée en parallèle avec ce condensateur, permet de faire varier l'impédance du TCSC en compensant tout ou partie de l'énergie réactive produite par le condensateur. La modification de la valeur de cette impédance se fait en jouant sur l'angle d'amorçage des thyristors, i.e. l'instant dans une période où les thyristors commencent a conduire. Il y a une zone critique correspondant à la résonance du circuit LC. La figure 3 permet de visualiser l'impédance globale du TCSC en fonction de l'angle d'amorçage. La zone de résonance 15 est nettement visible.

Le TCSC possède principalement deux modes de fonctionnement : le mode capacitif et le mode inductif. Le mode de fonctionnement dépend de la valeur de l'angle d'amorçage. Le démarrage du TCSC ne peut se faire qu'en mode capacitif.

Pour un angle d'amorçage supérieur à la valeur de résonance, le TCSC est en mode capacitif, et le courant est en avance sur la tension. Le TCSC fonctionne alors comme un condensateur et compense une partie de l'inductance de la ligne. La figure 4 illustre ainsi un fonctionnement en mode capacitif, la courbe 20 illustrant le courant capacitif, la courbe 21 illustrant le courant de ligne, la courbe 22 illustrant la tension capacitive (angle $\alpha$ = 65°).

La tension aux bornes du condensateur est augmentée (ou boostée) grâce à un surplus de courant provenant de la charge de l'inductance qui est additionné au courant de ligne lors de la fermeture de l'un des thyristors, par exemple T1. Cet accroissement peut être caractérisé par le rapport $Kb = X_{TCSC}/X_{CT}$ appelé facteur de Boost, où $X_{CT}$ est l'impédance du condensateur seul. Lors de la demi-période suivante, l'amorçage de l'autre thyristor, par exemple T2, permet de reproduire le cycle pour l'alternance opposée. L'amorçage des thyristors T1 et T2 provoque ainsi un cycle de charge/décharge de l'inductance vers le condensateur C à chaque demi-période. Le cycle complet dure une période complète du courant de ligne. Les deux thyristors T1 et T2 sont commandés en parallèle, l'un étant ouvert l'autre étant fermé, cette séquence variant avec l'alternance du courant.

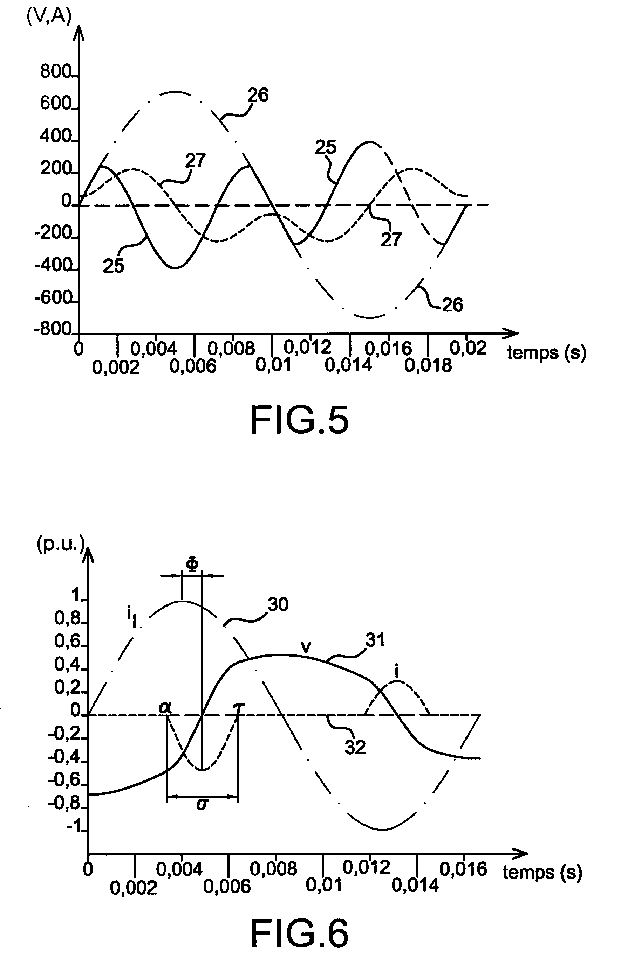

Dans le cas d'un mode fonctionnement inductif, l'angle d'amorçage est inférieur à la valeur de résonance, et le courant est en retard sur la tension. L'ordre d'amorçage des thyristors est inversé. La tension est fortement déformée par la présence d'harmonique non-négligeables. La figure 5 illustre ainsi un fonctionnement en mode inductif, la courbe 25 illustrant le courant capacitif, la courbe 26 illustrant le courant de ligne, la courbe 27 illustrant la tension capacitive.

Les TCSC sont principalement utilisés en mode capacitif, mais dans certains cas particuliers, ils doivent fonctionner en mode inductif. Le passage d'un mode à l'autre se fait grâce à une commande particulière des thyristors. Ces transitions ne sont possibles que si la constante de temps du circuit LC est inférieure à la période du réseau.

En régime permanent, le passage par zéro de la tension aux bornes du TCSC (et donc le minimum, ou maximum selon l'alternance du courant de ligne, de l'intensité du courant dans le TCSC) correspond exactement au maximum du courant de ligne, i.e. $\pi/2$ dans le cas d'un courant sinusoïdal. De nombreux calculs de modélisation peuvent être facilités en se plaçant dans le cas du régime permanent. La symétrie résultant d'une telle approximation permet, en effet, de considérablement simplifier les différentes expressions intervenant dans la modélisation. Cependant le modèle résultant n'est alors valable qu'en régime permanent, ce qui est une limitation importante puisque le contrôle se fait par variation de l'angle d'amorçage.

Dès que le régime devient transitoire (c'est à dire dès que l'angle d'amorçage varie), la symétrie évoquée précédemment disparaît, et, comme illustré sur la figure 6, on constate un déphasage Ø entre le maximum du courant de ligne $i_1$ (courbe 30) et le passage par zéro de la tension v (courbe 31) aux bornes du TCSC, la courbe 32 illustrant le courant i dans l'inductance du TCSC. Ce déphasage Ø est dû aux échanges d'énergie permanents entre l'inductance et la capacité. Tant que cet angle Ø, qui peut être vu comme une perturbation, conserve une valeur relativement petite, le système peut l'amortir et rester stable. Cependant des valeurs de Ø plus importantes peuvent conduire à des échanges d'énergie croissants aboutissant ainsi à l'instabilité du système.

L'angle d'amorçage $\alpha$ et l'angle de fin de conduction $\tau$ peuvent s'exprimer en fonction de l'angle de déphasage Ø grâce aux relations suivantes :

$$\alpha = \frac{\pi}{2} - \frac{\sigma}{2} + \varnothing$$

$$\tau = \frac{\pi}{2} + \frac{\sigma}{2} + \varnothing$$

Modélisation du TCSC

Pour la suite on fait les hypothèses suivantes :

- les thyristors sont considérés comme idéaux, et toute non-linéarité à l'ouverture ou à la fermeture est négligée,
- les thyristors sont connectés dans une ligne simple reliant une génératrice débitant dans un bus infini,
- le courant de ligne a pour expression $i_1 = I_1\sin(\omega_s t)$ et l'instant du maximum de courant est $\pi/2$,
- on se place dans l'intervalle $[\alpha, \alpha + \pi]$.

On introduit les notations suivantes :

$\alpha$ : angle d'amorçage des thyristors,
$\tau$ angle de fin de conduction,
$\sigma = \tau - \alpha$ : durée de conduction,
$\varnothing$ : angle de déphasage,
$\omega_0$ : pulsation de résonance,
$\omega_s$ : pulsation du réseau,

$$S \;=\; \frac{\omega_0^2}{\omega_0^2 - \omega_s^2}\,,$$

$$\eta \;=\; \frac{\omega_0}{\omega_s}, .$$

L : inductance, R : résistance, C : capacité du TCSC,
pulsation du réseau : $\omega_s = 2*50*\pi$,

pulsation de résonnance : $\omega_o = \dfrac{1}{\sqrt{LC}}$,

la Capacité effective :

$$C_{e\!f\!f}(\beta) = \left\{ \frac{1}{C} - \frac{4}{\pi}\left[ \frac{1}{2C}S\left(\beta + \frac{\sin(2\beta)}{2}\right) + \omega_s^2 L S^2 \cos^2(\beta)\,(\tan(\beta) - \eta\tan(\eta\beta)) \right] \right\}^{-1}$$

$\beta$ : Angle de semi-conduction

$u^* = \omega_s C_{eff}(\beta^*)$ : admittance équivalente de référence du TCSC,

$$\dot{V}^\star \quad = \quad \left[V_1^*, V_2^*\right]^T = \left[-\frac{|i_l|}{u^*}, 0\right]^T \quad : \quad \text{tension de référence,}$$

$V_1$ et $V_2$ : tensions mesurées,

$\underset{\sim}{V_1}{}^*$ *et* $\underset{\sim}{V_2}{}^*$*:* tensions de référence,

$\tilde{V}_1$ *et* $\tilde{V}_2$ : erreur de poursuite des tensions.

L'objectif principal est de proposer un modèle d'état du TCSC apte à représenter son comportement dynamique sur toute sa plage de fonctionnement. A partir des lois de Kirchoff et de la description du fonctionnement du TCSC, les équations régissant la dynamique du système se résument au système d'équation suivant :

$$\begin{cases} C\dfrac{dv}{dt} = i_l \ - \ i \\[2ex] L\dfrac{di}{dt} = qv \ - Ri \end{cases}$$

où q est la fonction de commutation telle que q = 1 pour $\omega_s t \in [\alpha, \tau]$ et q = 0 pour $\omega_s t \in [\tau, \pi + \alpha]$.

Le paramètre q pouvant prendre deux valeurs discrètes différentes selon l'état du système, le modèle obtenu s'apparente à un modèle d'état de type « structure variable ou hybride » (association de grandeurs continues et de grandeurs discrètes). Un tel modèle se prête assez mal à l'utilisation des techniques classiques de synthèse de lois de commande non linéaires, sauf à faire appel aux techniques très particulières de la commande des systèmes hybrides.

Afin d'obtenir un modèle plus adapté, on va maintenant introduire la notion de phaseur. La décomposition de Fourier en phaseurs, moyennés sur une période T, permet en effet de s'affranchir de cette structure double du modèle d'état.

La méthode de moyenne généralisée réalisée ici pour obtenir le modèle de dynamique des phaseurs est basée sur le fait qu'une sinusoïde x (.) peut être représentée sur l'intervalle ]t-T,t] à l'aide d'une série de Fourier de la forme :

$$x(\tau) = \mathrm{Re}\left\{\sum_{k \geq 0} X_k(t)e^{jk\omega_s \tau}\right\}$$

$$\omega_s \ = \frac{2\pi}{T}$$

$$\tau \ \in \ \left]\, t - T, t\,\right]$$

où Re représente la partie réelle, et $X_k(t)$ sont les coefficients complexes de Fourier, que l'on appelle également phaseurs. Ces coefficients de Fourier sont fonctions du temps, puisque l'intervalle considéré dépend du temps (on peut parler de fenêtre glissante). Le k-ième coefficient (ou phaseur k) au temps t est donné par la moyenne suivante :

$$X_k(t) = \frac{c}{T}\int_{t-T}^{t} \ x(\tau)e^{-jk\omega_s \tau} \ d\tau$$

$$X_k(t) = <x>_k(t)$$

avec c = 1 pour k = 0 et c = 2 pour k = > 0. On obtient un modèle d'état pour lequel les coefficients définis ci-dessus sont les variables d'état.

On appelle harmonique de rang k de la fonction x, la fonction sinusoïdale obtenue avec le coefficient de Fourier d'indice k. C'est la fonction $X_k e^{jkw_s \tau}$. Le premier harmonique est appelé fondamental.

Pour k=0, le coefficient $X_0$ n'est autre que la valeur moyenne de x.

La dérivée du k-ième coefficient de Fourier est donnée par l'expression suivante :

$$\frac{dX_k}{dt} = <\frac{dx}{dt}>_k - jk\omega_s X_k$$

On peut remarquer aussi que si $f\left(t + \frac{T}{2}\right) = -f(t)$, les harmoniques paires de f sont nulles.

La convention pour l'écriture des complexes peut varier. La plupart des articles concernant les modélisations et commandes du TCSC ont adopté la convention z = a-ib et non z = a+ib, écriture qui est utilisée ici. Cependant il est à noter que ce choix n'influe en rien sur les résultats présentés, tant que la décomposition des équations complexes en partie réelle et partie imaginaire se fait de manière rigoureuse et en respectant la convention adoptée dès le départ. La transformée de Fourier en elle même reste identique dans les deux cas. La seule différence importante vient du signe de $\omega_s$. En effet en adoptant la convention a-ib, on change l'orientation de l'axe des imaginaires, la rotation des phaseurs change donc de sens et $\omega_s$ devient négatif.

Le modèle statique n'étant pas exploitable et s'avérant insuffisant, on va donc tenter d'établir un modèle présentant une dynamique sur les fondamentaux de tension et de courant.

En utilisant la décomposition de Fourier, on va donc pouvoir établir la dynamique des phaseurs des signaux de tension et de courant.

En partant des équations régissant les dynamiques de tension et de courant données précédemment :

$$\begin{cases} C\dfrac{dv}{dt} = i_l - i \\ L\dfrac{di}{dt} = qv - Ri \end{cases}$$

on applique la transformée de Fourier et on récupère alors le modèle :

$$\begin{cases} C<\dfrac{dv}{dt}>_k = <i_l>_k - <i>_k \\ L<\dfrac{di}{dt}>_k = <qv>_k - R<i>_k \end{cases}$$

avec $<qv>_k = \dfrac{2\omega_s}{\pi}\displaystyle\int_{\alpha/\omega_s}^{\tau/\omega_s} v(\omega_s t)e^{-jk\omega_s t}dt$ .

D'après l'expression précédente donnant $\dfrac{dXt}{dt}$ , le système précédent devient :

$$\begin{cases} C\dfrac{dV_k}{dt} = I_{lk} - I_k - \dfrac{1}{C}jk\omega_s V_k \\ L\dfrac{dI_k}{dt} = <qv>_k - RI_k - \dfrac{1}{L}jk\omega_s I_k \end{cases}$$

On va dans un premier temps se limiter uniquement au fondamental.

On note $V_{1c}$, $V_{1s}$, $I_{1c}$, $I_{1s}$ les parties réelles (cosinus) et imaginaires (sinus) des fondamentaux (ou premiers phaseurs) de la tension et du courant. On a donc :

$$V_1 = V_{1c} + jV_{1s}$$

$$I_1 = I_{1c} + jI_{1s}$$

On sait que la contribution du fondamental sur le signal total est de la forme :

$$v_1 = V_{1c}\cos(\omega_s t) - V_{1s}\sin(\omega_s t)$$

Ainsi le calcul de $<qv>_1$ donne:

$$<qv>_1 = \frac{1}{\pi}\left[V_1\sigma + \tilde{V}_1\sin(\sigma)e^{-2j\left(\frac{\pi}{2}+\phi\right)}\right]$$

On obtient ainsi un modèle d'état complexe du second ordre. En séparant les parties réelles et imaginaires, on trouve un modèle réel d'ordre 4, dont les variables d'état sont $V_{1c}$, $V_{1s}$, $I_{1c}$, $I_{1s}$ :

$$\begin{cases} C\dfrac{dV_{1c}}{dt} = I_{l1c} - I_{1c} - \dfrac{1}{C}j\omega_s V_{1s} \\[2mm] C\dfrac{dV_{1s}}{dt} = I_{l1s} - I_{1s} - \dfrac{1}{C}j\omega_s V_{1c} \\[2mm] L\dfrac{dI_{1c}}{dt} = \mathrm{Re}(<qv>_1) - RI_{1c} - \dfrac{1}{L}j\omega_s I_{1s} \\[2mm] L\dfrac{dI_{1s}}{dt} = \mathrm{Im}(<qv>_1) - RI_{1s} - \dfrac{1}{L}j\omega_s I_{1c} \end{cases}$$

Cependant, si $\alpha$ est contrôlé, $\tau$ dépend du passage par zéro du courant dans l'inductance, et peut être déterminé par résolution d'une équation transcendante. En conséquence, $\tau$ ne dépend pas uniquement de $V_1$, $I_1$ et $I_\ell$. Mais certaines approximations permettent de convertir le système précédent en un véritable modèle d'état. Il suffit pour cela de pouvoir exprimer Ø en fonction des quantités citées précédemment. On a supposé que le signal était suffisamment bien approché par le signal obtenu avec le fondamental uniquement. On peut donc exprimer Ø comme le décalage entre le fondamental du courant de ligne et le fondamental du courant dans l'inductance, i.e. :

$$\varnothing = \arg\left[-I_\ell \cdot \bar{I}_1\right]$$

Tous les paramètres du modèle peuvent ainsi être déterminés en fonction de $V_1$ $I_1$ et $I_\ell$.

<u>Lois de commande du TCSC</u>

Le document référencé [1] en fin de description définit un dispositif de commande d'un TCSC selon une loi de commande telle que les instants des passages à zéro de la tension aux bornes du condensateur du TSC soient sensiblement équidistants même pendant des durées où le courant passant dans la ligne de transport d'énergie contient des composantes subsynchrones en plus de sa composante fondamentale.

Un second document de l'art connu, le document référencé [2], décrit une loi de commande basée sur la théorie plus générale des modes glissants, l'objectif étant de trouver un contrôle permettant au fondamental de la tension de suivre une référence $V^* = [V_1^*, 0]^T$. Mais cette loi de commande n'est valable qu'en régime capacitif.

L'invention a pour objet un système et un procédé de contrôle d'un TCSC dans un réseau d'énergie électrique, en proposant de nouvelles lois de commande générant les instants d'amorçage des thyristors de ce TCSC, fonctionnant aussi bien en mode capacitif qu'en mode inductif.

## EXPOSÉ DE L'INVENTION

L'invention concerne un système de commande d'un TCSC disposé sur une ligne haute tension d'un réseau de transport d'énergie électrique, qui comprend :

- un module de mesure de tension qui permet d'extraire les harmoniques de la tension aux bornes du TCSC,
- un module de mesure du courant qui permet d'extraire l'amplitude du fondamental et éventuellement des autres harmoniques du courant de la ligne haute tension,
- un régulateur selon une loi de commande non linéaire, qui reçoit en entrée les sorties des deux modules de mesure de tension et de courant, et une tension de référence correspondant au fondamental de la tension ligne que l'on veut obtenir aux bornes du TCSC, et qui délivre une admittance effective équivalente,
- un module d'extraction de l'angle de commande selon un algorithme d'extraction qui reçoit cette admittance effective équivalente et qui délivre un angle de commande,
- un module de commande des thyristors du TCSC, qui reçoit cet angle de commande et une référence de zéro courant caractérisé en ce que la référence de zéro courant est délivrée par une boucle à verrouillage de phase donnant la position du courant,

et en ce que la loi de commande est telle que :

$$u = \frac{f(\sigma) - sign(V_1^*)\left|i_l\right|}{V_2 + sign(V_1^*)\,(V_1^* + \sigma)}$$

Avec :

la surface de glissement $\sigma = \tilde{V}_1 - sign(V_1^*)V_2$
et
f : fonction d'interpolation linéaire,
$V_1$ et $V_2$ : tensions mesurées,

$V_1^*$ et $V_2^*$ : tensions de référence,

$\tilde{V}_1$ et $\tilde{V}_2$ : erreur de poursuite de tensions. Avantageusement on a :
$f(\sigma) = k_1\,atan(k_2\sigma)$
$k_1 = (R|V_2|+\delta)$

Avec :

$K_1$ et $k_2$ constantes de réglage positives,

$\delta > 0$,

$R = \omega_s/f(\overline{\beta}_0)$,

$\overline{\beta}_0$ : valeur à l'équilibre de $\beta_0$,

$\beta_0$ : angle de contrôle,

$\omega_s$ : pulsation du réseau,

Avantageusement l'algorithme d'extraction d'angle comprend un tableau, une modélisation ou une recherche par dichotomie.

L'invention concerne également un procédé de commande d'un TCSC disposé sur une ligne haute tension d'un réseau de transport d'énergie électrique, qui comprend les étapes suivantes :

- une étape de mesure de tension qui permet d'extraire les harmoniques de tension aux bornes du TCSC,
- une étape de mesure du courant qui permet d'extraire l'amplitude du fondamental et éventuellement des autres harmoniques du courant de la ligne haute tension,
- une étape de régulation selon une loi de commande non linéaire, à partir des signaux de mesure de tension et de courant, et d'une tension de référence correspondant au fondamental de la tension ligne que l'on veut obtenir aux bornes du TCSC, pour obtenir une admittance effective équivalente,

- une étape d'extraction de l'angle de commande selon un algorithme d'extraction d'angle à partir de cette admittance effective équivalente, pour obtenir un angle de commande,

- une étape de commande des thyristors du TCSC à partir de cet angle de commande et d'une référence de zéro courant caractérisé en ce que la reférence de zéro courant est délivrée par une boucle à verrouillage de phase donnant la position du courant,

et en ce que la loi de commande est telle que :

$$u = \frac{f(\sigma) - sign(V_1^*)|i_l|}{V_2 + sign(V_1^*)\,(V_1^* + \sigma)}$$

Avec :

la surface de glissement $\sigma = \widetilde{V}_1 - sign(V_1^*)V_2$
et
f : fonction d'interpolation linéaire,
$V_1$ et $V_2$ : tensions mesurées,
$V_1^*$ et $V_2^*$ : tensions de référence,
$\widetilde{V}_1$ et $\widetilde{V}_2$ : erreur de poursuite de tensions.

Avantageusement on a :

$$f(\sigma) = k_1\,\mathrm{atan}(k_2\sigma)$$

$$k_1 = \left(R|V_2| + \delta\right)$$

Avec :

$K_1$ et $k_2$ constantes de réglage positives,

$\delta > 0$,

$$R = \omega_s / f\,(\overline{\beta}_0)\,,$$

$\overline{\beta}_0$ : valeur à l'équilibre de $\beta_0$,

$\beta_0$ : angle de contrôle,

$\omega_s$ : pulsation du réseau.

Avantageusement la loi de commande est déterminée par une approche « modes glissants ».

**BRÈVE DESCRIPTION DES DESSINS**

La figure 1 illustre la puissance active en fonction de l'angle de transmission pour trois valeurs différentes du taux de compensation.
La figure 2 illustre le schéma électrique du TCSC.
La figure 3 illustre l'impédance du TCSC en fonction de l'angle d'amorçage.
La figure 4 illustre le fonctionnement du TCSC en mode capacitif.
La figure 5 illustre le fonctionnement du TCSC en mode inductif.
La figure 6 illustre les courbes de courant et de tension du TCSC en mode capacitif.
La figure 7 illustre le système de l'invention.
La figure 8 illustre l'admittance effective équivalente du TCSC en fonction de l'angle $\beta$, dans un système de l'art connu.
La figure 9 illustre un comportement dynamique sur la surface $\sigma = 0$.
Les figures 10 à 14 illustrent des résultats comparatifs obtenus avec la loi de commande définie dans le document référencé [2] et avec la loi de commande de l'invention.

**EXPOSÉ DÉTAILLÉ DE MODES DE RÉALISATION PARTICULIERS**

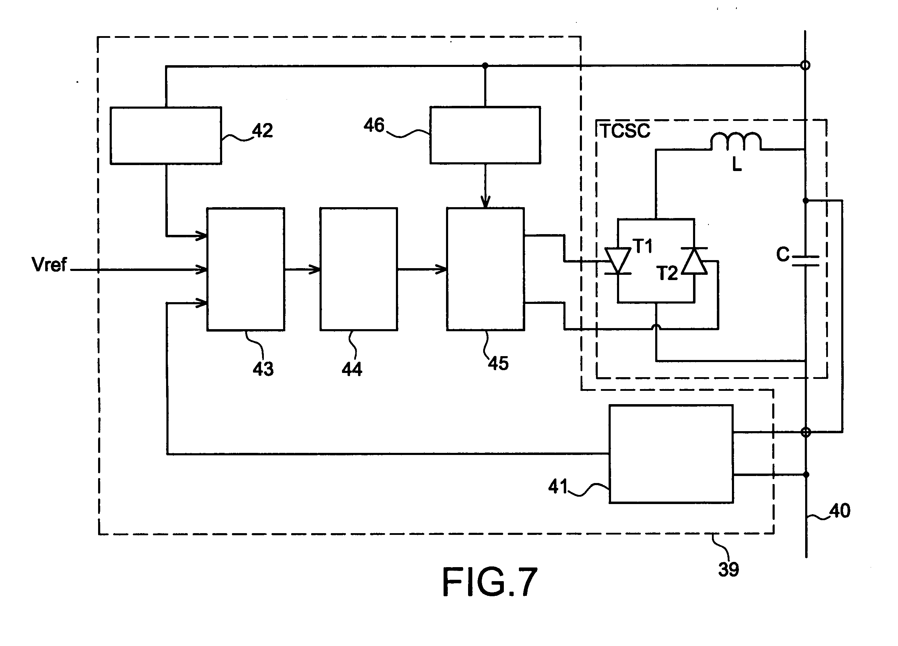

Le système de commande d'un TCSC dans un réseau de transport électrique selon l'invention est illustré sur la figure 7. Ce TCSC, qui est disposé sur une ligne haute tension 40, comprend un condensateur C, une inductance L, et un ensemble de deux thyristors T1 et T2.
Ce système de commande 39 comprend :

- un module de mesure de tension 41 qui permet d'extraire les harmoniques de tension aux bornes du TCSC,
- un module de mesure du courant 42 qui permet d'extraire l'amplitude du fondamental et éventuellement des autres harmoniques du courant circulant dans la ligne haute tension 40,
- un régulateur 43 selon une loi de commande non linéaire déterminée, qui reçoit en entrée les sorties des deux modules 41 et 42 de mesure de tension et de courant, et une tension de référence $V_{ref}$ correspondant au fondamental (harmonique 1 à 50 Hz) de la tension ligne que l'on veut obtenir aux bornes du TCSC, et qui délivre une admittance effective équivalente,
- un module 44 d'extraction de l'angle de commande selon un algorithme d'extraction d'angle (par exemple un tableau, une modélisation ou une recherche par dichotomie) qui reçoit cette admittance effective équivalente et qui délivre un angle de commande,
- un module 45 de commande des thyristors T1 et T2 du TCSC qui reçoit cet angle de commande et une référence de zéro courant délivrée par une boucle à verrouillage de phase 46 donnant la position du courant.

Le procédé de commande d'un TCSC disposé sur une ligne haute tension d'un réseau de transport d'énergie électrique selon l'invention, comprend les étapes suivantes :

- une étape de mesure de tension qui permet d'extraire les harmoniques de tension aux bornes du TCSC,
- une étape de mesure du courant qui permet d'extraire l'amplitude du fondamental et éventuellement des autres harmoniques du courant circulant dans la ligne haute tension,
- une étape de régulation selon une loi de commande non linéaire, à partir des signaux de mesure de tension et de courant, et d'une tension de référence correspondant au fondamental de la tension ligne que l'on veut obtenir aux bornes du TCSC, pour obtenir une admittance effective équivalente,
- une étape d'extraction de l'angle de commande selon un algorithme d'extraction d'angle à partir de cette admittance effective équivalente et pour obtenir un angle de commande,
- une étape de commande des thyristors (T1, T2) du TCSC à partir de cet angle de commande et d'une référence de zéro courant délivrée par une boucle à verrouillage de phase donnant la position du courant.

Pour décrire plus précisément le procédé de l'invention, on va, ci-dessous, analyser successivement une loi de commande de l'art connu, et une première et seconde lois de commande de l'invention.

Loi de commande de l'art connu

On va, à présent, analyser une loi de commande de l'art connu décrite dans le document référencé [2]. Cette loi de commande est obtenue en utilisant la théorie des « modes glissants » (« sliding modes »).

La commande par modes glissants dédiée au contrôle des systèmes non linéaires est réputée pour ses qualités de robustesse mais aussi par les contraintes imposées aux actionneurs. Le réglage de ce type de commande rend difficile son applicabilité dans l'industrie. De plus, il n'existe pas de méthode systématique de conception de la commande par modes glissants d'ordre supérieur quelconque.

Le concept de la commande par modes glissants se décompose en deux étapes :

1. On amène le système sur une variété stable satisfaisant aux conditions souhaitées (« reaching phase »),
2. On « glisse » sur la « surface » ainsi définie jusqu'à l'équilibre recherché (« sliding phase »).

On considère par exemple le système du second ordre suivant :

$$\begin{cases} \dot{x}_1 = x_2 \\ \dot{x}_2 = f(x) + g(x)u \end{cases}$$

On considère les hypothèses suivantes :

- f et g sont des fonctions non-linéaires,
- g est positive.

On souhaite amener ce système à l'équilibre. La première étape consiste donc à construire une variété stable menant à l'équilibre souhaité :

$x_1$ est stable si

$$\dot{x}_1 = -ax_1$$

Avec a > 0 (ou Re (a) >0 dans le cas complexe avec Re=Partie réelle)

On peut alors définir une coordonnée par rapport à la variété stable qui nous donne un ensemble de surfaces définies par :

$$s = x_2 + ax_1$$

on a également :

$$\dot{s} = \dot{x}_2 + a\dot{x}_1$$

$$\dot{s} = f(x) + g(x)u + ax_2$$

Le système d'équations précédent est donc stable sur la surface s = 0. Ainsi dès lors que l'on a pu amener le système sur cette surface, on est certain de converger vers l'équilibre.

Il faut donc maintenant rendre cette surface attractive pour le système. On peut pour cela utiliser les arguments de Lassalle. On considère la fonction suivante :

$$V \ = \ \frac{1}{2}s^2$$

Cette fonction est évidemment nulle à l'origine et positive partout ailleurs. Sa dérivée en temps est donnée par :

$$\dot{V} = \dot{s}s$$

$$\dot{V} = s(f(x) + g(x)u + ax_2)$$

$\dot{V}$ est définie négative si :

$$f(x) \ + \ g(x)u \ + \ ax_2 \ \begin{cases} < 0 \ pour \ s > 0 \\ = 0 \ pour \ s = 0 \\ > 0 \ pour \ s < 0 \end{cases}$$

La stabilité est donc assurée si :

$$u \begin{cases} < \beta(x) \ pour \ s > 0 \\ = \beta(x) \ pour \ s = 0 \\ > \beta(x) \ pour \ s < 0 \end{cases} \quad \beta(x) \ = -\frac{f(x) + ax_2}{g(x)}$$

Ceci est assuré par la loi de commande :

$$u \ = \ \beta(x) - Ksign(s)$$

En appliquant cette loi de commande, on converge donc vers la surface définie par s=0, qui amène à l'équilibre souhaité.

On peut utiliser cette théorie des modes glissants pour trouver une nouvelle commande applicable au cas du TCSC. Pour le calcul de cette commande, on s'appuie sur un modèle simplifié du TCSC basé sur le modèle général :

$$\begin{cases} C\dfrac{dV}{dt} = & I_t - \ I \ - JC\omega_s V \\ L\dfrac{dI}{dt} = \ < qv >_1 \ - \ JL\omega_s I \end{cases}$$

En analysant les valeurs propres du système linéarisé, on constate que les dynamiques des phaseurs de courant I sont beaucoup plus importantes que celles de tension V. Le système peut donc se ramener à :

$$C\frac{dV}{dt} = I_l - J\omega_s C_{\textit{eff}}(\beta)V$$

où :

$$J = \begin{pmatrix} 0 & -1 \\ 1 & 0 \end{pmatrix}, I_l = \begin{bmatrix} 0, -|i_l| \end{bmatrix}^T, V = \begin{bmatrix} V_1, V_2 \end{bmatrix}^T$$

$\beta$ représente la demi-période de conduction, et $C_{\textit{eff}}(\beta)$ représente la capacitance effective de régime quasi-permanent, et est donné par la formule :

$$C_{\textit{eff}}(\beta) = \left\{ \frac{1}{C} - \frac{4}{\pi}\left[ \frac{1}{2C}S\left(\beta + \frac{\sin(2\beta)}{2}\right) + \omega_s^2 LS^2\cos^2(\beta)\left(\tan(\beta) - \eta\tan(\eta\beta)\right) \right] \right\}^{-1}$$

Pour plus de précision, on peut tenir compte de l'angle ø de déphasage entre le courant de ligne et la tension dans le TCSC.
On a alors :

$$\beta = \beta_0 + \varnothing$$

avec $\varnothing = \texttt{atan}\left(\dfrac{V_2}{V_1}\right)$

$\beta_0$ désigne ici l'angle de demi-conduction en régime quasi-permanent.
Pour séparer ø et $\beta_0$, on peut considérer ø comme une perturbation connue à amortir.
On effectue alors l'approximation suivante :

$$C_{\textit{eff}}(\beta) = C_{\textit{eff}}(\beta_0 + \phi)$$

$$C_{\textit{eff}}(\beta) = C_{\textit{eff}}(\beta_0) + \phi\frac{\delta C_{\textit{eff}}}{\delta\beta}\bigg|_{\beta_0}$$

En région capacitive :

$$f(\beta_0) \triangleq \frac{\delta C_{\textit{eff}}}{\delta\beta}\bigg|_{\beta_0} < 0$$

Comme on a ø <<<1, on peut également approximer ø de la manière suivante :

$$\phi = \arctan\left(-\frac{V_2}{V_1}\right)$$

$$\phi \simeq -\frac{V_2}{V_1}$$

L'équation du système devient alors :

$$C\frac{dV}{dt} = I_l - J\omega_s C_{eff}(\beta)V$$

$$C\frac{dV}{dt} \simeq I_l - J\omega_s C_{eff}(\beta_0)V + J\omega_s \frac{V_2}{V1}f(\beta_0)V$$

Le dernier terme peut également s'écrire de la manière suivante :

$$J\omega_s \frac{V_2}{V_1}f(\beta_0)V = \omega_s \frac{V_2}{V_1}f(\beta_0)\begin{bmatrix} -V_2 \\ V_1 \end{bmatrix}$$

$$J\omega_s \frac{V_2}{V_1}f(\beta_0)V = \omega_s f(\beta_0)\begin{bmatrix} -\dfrac{V_2^2}{V_1^2} & 0 \\ 0 & 1 \end{bmatrix}\begin{bmatrix} V_1 \\ V_2 \end{bmatrix}$$

$$J_s\frac{V_2}{V_1}f(\beta_0)V = K(V,\beta_0)V$$

La structure de la matrice K (V, $\beta_0$) montre que ce terme non-linéaire apporte un amortissement sur la seconde ligne uniquement (en mode capacitif). Pour cette raison, les efforts dans l'élaboration de la loi de commande portent principalement sur l'amortissement dans la dynamique de $V_1$.

On peut observer également que K(V, $\beta_0$) dépend à la fois de l'état et du contrôle. En outre, on souhaite extraire l'angle de contrôle $\beta_0$ en considérant uniquement $C_{eff}(\beta_0)$ sans tenir compte de son influence dans K(V, ($\beta_0$). Il est donc préférable de définir une nouvelle variable de contrôle u=$\omega_s C_{eff}(\beta_0)$, et de calculer u. On peut ensuite en déduire l'angle $\beta_0$ par dichotomie par exemple. Si l'on veut retrouver l'angle $\beta_0$ en tenant compte de ses effets à la fois sur K(V, $\beta_0$) et $C_{eff}(\beta_0)$, le processus devient extrêmement complexe.

Afin de faciliter le processus de conception du contrôle en abolissant l'influence du signal de contrôle dans le terme K(V, $\beta_0$)V, on considère l'évaluation de ce terme au point d'équilibre, ce qui permet d'obtenir le terme linéaire suivant :

$$\omega_s f(\beta_0) \begin{bmatrix} -\dfrac{V_2^2}{V_1^2} & 0 \\ 0 & 1 \end{bmatrix} V \rightarrow -\begin{bmatrix} 0 & 0 \\ 0 & \omega_s \left| f(\overline{\beta}_0) \right| \end{bmatrix} V$$

$$= -K(\overline{\beta}_0) V$$

où K est une matrice semi-définie positive, la constance $\overline{\beta}_0$, est la valeur à l'équilibre de $\beta_0$.

On note également R = $\omega_s |f(\overline{\beta}_0)|$.

Le système se réduit finalement à :

$$C \frac{d}{dt} V = I_l - JuV - K(\overline{\beta}_0) V$$

ou encore

$$\begin{cases} C \dfrac{d}{dt} V_1 = uV_2 \\ C \dfrac{d}{dt} V_2 = -\left| i_l \right| - uV_1 - RV_2 \end{cases}$$

On peut maintenant procéder au calcul de la loi de commande de manière plus conventionnelle, car l'amortissement apparaît explicitement dans le modèle.

Pour le calcul de la loi de commande, le but est ici de trouver u, et donc par la suite $\beta_0$, tel que $V = [V_1, V_2]^T$ suive la référence $V^* = [V_1^*, 0]^T$. On suppose que le courant de ligne est sinusoïdal et a pour expression $i_l(t) = |i_l| sin(\omega_s t)$, et avec la référence $V_1^* = -\dfrac{\left| i_l \right|}{u*}$ .

Dans cette approche, on définit une surface qui est une combinaison linéaire des états, puis on prouve que cette surface contient le point d'équilibre désiré, et que toutes les trajectoires partant sur cette surface convergent vers l'équilibre. Il suffit donc de rendre la surface ainsi définie attractive en utilisant une fonction de Lyapunov.

On définit une surface de la manière suivante :

$$\sigma = \tilde{V}_1 + V_2$$

Avec $\tilde{V}_1 = V_1 - V_1^*$

Une telle surface représente la somme des erreurs sur les variables d'état. On souhaite donc converger vers la surface $\sigma^* = 0$ correspondant à une somme d'erreurs nulle. On considère alors la fonction quadratique

$$H = \frac{C}{2} \sigma^2$$

La dérivée en temps de cette fonction H est donnée par :

$$\dot{H} = C \sigma \dot{\sigma}$$

$$\dot{H} = C\sigma(\dot{\tilde{V}}_1 + \dot{V}_2)$$

$$\dot{H} = C\sigma(\dot{V}_1 - \dot{V}_1^* + \dot{V}_2)$$

$$\dot{H} = \sigma(C\dot{V}_1 + C\dot{V}_2)$$

$$\dot{H} = \sigma\left(uV_2 - uV_1 - RV_2 - |i_l|\right)$$

Dans le cas où l'amplitude du courant de ligne est connue, on peut utiliser le contrôleur suivant :

$$u \;\; = \;\; \frac{f(\sigma) + |i_l|}{V_2 - V_1}$$

$$u \;\; = \;\; \frac{f(\sigma) + |i_l|}{2V_2 - (V_1^* + \sigma)}$$

où f est une fonction telle que σ $f(\sigma)$<0, $f(0)$ = 0.
On obtient alors :

$$\dot{H} = \sigma(f(\sigma) - RV_2)$$

$$\dot{H} = \sigma f(\sigma) - RV_2^2 - R\tilde{V}_1 V_2$$

On peut choisir pour f une approximation de la fonction « signe » :

$$f(\sigma) = -k_1 \, \mathrm{atan}(k_2\sigma)$$

où $k_1$ et $k_2$ sont des constantes de réglage positives.
En appliquant le contrôle u ci-dessus, on peut donc rendre la surface σ=0 attractive. Pour cela il faut rendre l'expression de $\dot{H}$ négative en trouvant les gains $k_1$ et $k_2$ appropriés. $k_1$ est le véritable gain, $k_2$ ne servant qu'à « aplatir » la fonction signe autour de 0. On peut donc, en choisissant une valeur de $k_1$ judicieuse, faire en sorte que $\dot{H}$ reste négative quelque soit la valeur prise par le terme -$R\tilde{V}_1 V_2$.
Une fois la surface atteinte, il reste à vérifier le comportement du système sur cette surface, afin de s'assurer que l'on se dirige bien vers le point d'équilibre ($\tilde{V}^*_1, V^*_2$).
On analyse donc la dynamique du système sur cette surface.
Sur cette surface, le contrôle u devient :

$$u \;\; = \;\; \frac{f(\sigma) + |i_l|}{2V_2 - V_1^* - \sigma}$$

$$u = -\frac{|i_l|}{2\tilde{V}_1 - V_1^*}$$

Avec ce contrôle, la dynamique de $\tilde{V}_1$ restreinte à $\sigma = 0$ est donnée par :

$$C\dot{\tilde{V}}_1 = uV_2 = \frac{|i_l|\tilde{V}_1}{2\tilde{V}_1 + V_1^*} = \frac{|i_l|}{2}\left(1 - \frac{V_1^*}{2\tilde{V}_1 + V_1^*}\right)$$

L'équilibre de cette dynamique est obtenu pour $\dfrac{V_1^*}{2\tilde{V}_1 + V_1^*} = 1$, et donne $\bar{\tilde{V}}_1 = 0$, ce qui implique directement $\tilde{V}_2 = 0$ (en notant $(\bar{\cdot})$ la valeur de (.) à l'équilibre). La même étude peut être réalisée sur la dynamique de $V_2$. On trouve alors un second point d'équilibre en plus du point (0,0). Cependant la dynamique de $\tilde{V}_1$ montre que le point (0,0) est le seul point d'équilibre général du système, puisque dès que $V_2$ est différent de 0, cette dynamique amène à l'origine.

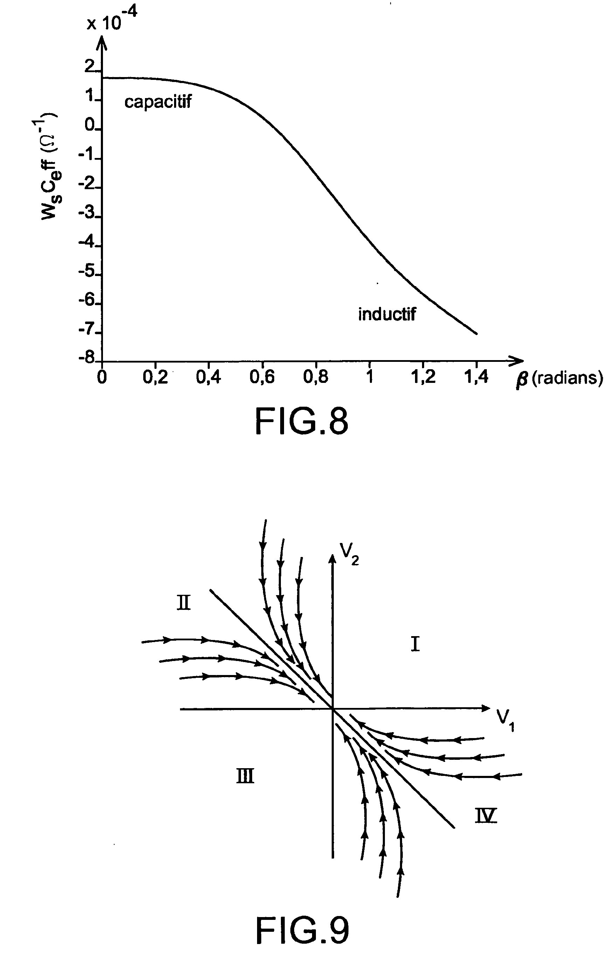

En se limitant au régime capacitif, on a alors $u > 0$, comme illustré sur la figure 8. Donc quand $V_2 < 0$, l'équation $C\dot{\tilde{V}}_1 = uV_2$ montre que $\dot{\tilde{V}}_1 < 0$, et inversement quand $V_2 > 0$, on a $\dot{\tilde{V}}_1 > 0$. On peut donc conclure qu'une fois sur la surface $\sigma = 0$, le contrôle u amène bien au point d'équilibre désiré, comme illustré sur la figure 9.

Cette commande s'avère la plus efficace tant pour la robustesse que pour la dynamique, cependant aucun réglage n'a pu être trouvé pour $k_1$ et $k_2$ qui permette de fonctionner en mode inductif. En effet, comme on l'a précisé plus haut, cette commande n'est valable qu'en régime capacitif. En inductif, on a $u < 0$ et le raisonnement appliqué ci-dessus n'est plus valable. On voit en effet que ce contrôle, une fois sur la surface, ne mène pas l'état à son équilibre, puisqu'à présent, quand $V_2 < 0$, l'équation $C\dot{\tilde{V}}_1 = uV_2$ est telle que $\dot{\tilde{V}}_1 > 0$, et inversement quand $V_2 > 0$, on a $\dot{\tilde{V}}_1 < 0$.

L'invention a pour objet d'étendre cette loi de commande au domaine inductif.

<u>Loi de commande de l'invention</u>

Dans le mode de fonctionnement ci-dessus, le problème vient du fait que, en mode inductif, lorsque $v_2 > 0$, $\tilde{V}_1$ décroît, et inversement lorsque $V_2 < 0$, $\tilde{V}_1$ croît.

Si l'on modifie la surface s de manière à la placer cette fois dans les cadrans I et III du plan de la figure 9, le comportement dynamique du système sur la surface étant le même qu'en mode capacitif, le contrôle amène bien au point d'équilibre.

On se propose donc de reprendre le même raisonnement qu'en mode capacitif, en posant cette fois :

$$\sigma = \tilde{V}_1 - V_2$$

En conservant la même fonction de Lyapunov que précédemment :

$$H = \frac{C}{2}\sigma^2$$

la dérivée devient cette fois :

$$\dot{H} = \sigma\left(uV_2 + uV_1 + RV_2 + |i_l|\right)$$

La commande u à utiliser est alors donnée par :

$$u = \frac{f(\sigma) - |i_l|}{V_2 + V_1}$$

$$u = \frac{f(\sigma) - |i_l|}{2V_2 - (V_1^* + \sigma)}$$

L'expression de H devient alors :

$$\dot{H} = \sigma(f(\sigma) + RV_2)$$

De la même façon que précédemment, on peut rendre cette expression négative en jouant sur les gains de la fonction $f(\sigma)$.

On peut alors analyser la dynamique du système sur cette nouvelle surface.

Sur cette surface, le contrôle u devient :

$$u = \frac{f(\sigma) - |i_l|}{2V_2 + V_1^* + \sigma}$$

$$u = \frac{|i_l|}{2\tilde{V}_1 + V_1^*}$$

Avec ce contrôle u, la dynamique de $\tilde{V}_1$ restreinte à $\sigma = 0$ est donnée par :

$$C\dot{\tilde{V}}_1 = uV_2 = \frac{|i_l|\tilde{V}_1}{2\tilde{V}_1 + V_1^*} = \frac{|i_l|}{2}\left(1 - \frac{V_1^*}{2\tilde{V}_1 + V_1^*}\right)$$

On retrouve donc l'origine comme unique point d'équilibre.

Comme illustré sur la figure 8 u<0. Donc quand $V_2<0$, l'équation $C\dot{\tilde{V}}_1 = uV_2$ est telle que $\dot{\tilde{V}}_1 > 0$, et inversement quand $V_2>0$, $\dot{\tilde{V}}_1 < 0$. On peut donc conclure qu'une fois sur la surface $\sigma = 0$, le contrôle u amène bien au point d'équilibre désiré.

En traitant le cas général (capacitif + inductif), on peut donc considérer la surface de glissement suivante :

$$\sigma = \tilde{V}_1 - sign(V_1^*)V_2$$

La forme générale de la dérivée de la fonction de Lyapunov étant donnée par :

$$\dot{H} = \sigma(f(\sigma) + sign(V_1^{\bullet})\,RV_2$$

on peut écrire que le contrôle u est donné par :

$$u = \frac{f(\sigma) - sign(V_1^{\bullet})|i_l|}{V_2 + sign(V_1^{\bullet})(V_1^{\bullet} + \sigma)}$$

On a donc à présent exprimé une loi de commande fonctionnant aussi bien en capacitif qu'en inductif. On se propose à présent de faciliter ce réglage et d'optimiser la loi de commande établie.

Optimisation de la loi de commande de l'invention

On a une fonction de Lyapunov dont la forme générale de la dérivée était donnée par :

$$\dot{H} = \sigma(f(\sigma) + sign(V_1^{\bullet})\,RV_2$$

On va à présent calculer la valeur de $k_1$ permettant au terme $k_1 atan(k_2\sigma)$ de compenser le terme $R\tilde{V}_1 V_2$ de telle sorte que la somme de ces deux termes reste négative ($\dot{H}<0$) quelques soient $\tilde{V}_1$ et $V_2$, soit

$$\sigma(f(\sigma) + sign(V_1^{\bullet})RV_2) < 0$$

Or la fonction atan($k_2\sigma$) n'est qu'une approximation de la fonction sign($\sigma$), on obtient donc :

$$-k_1 + sign(V_1^{\bullet})RV_2 < 0$$

$$si\ \sigma > 0$$

$$k_1 + sign(V_1^{\bullet})RV_2 > 0$$

$$si\ \sigma > 0$$

Il suffit donc de choisir le gain variable $k_1 = (R|V_2|+\delta)$, avec $\delta>0$ pour rendre l'origine asymptotiquement stable, c'est-à-dire pour rendre la surface $\sigma=0$ attractive.

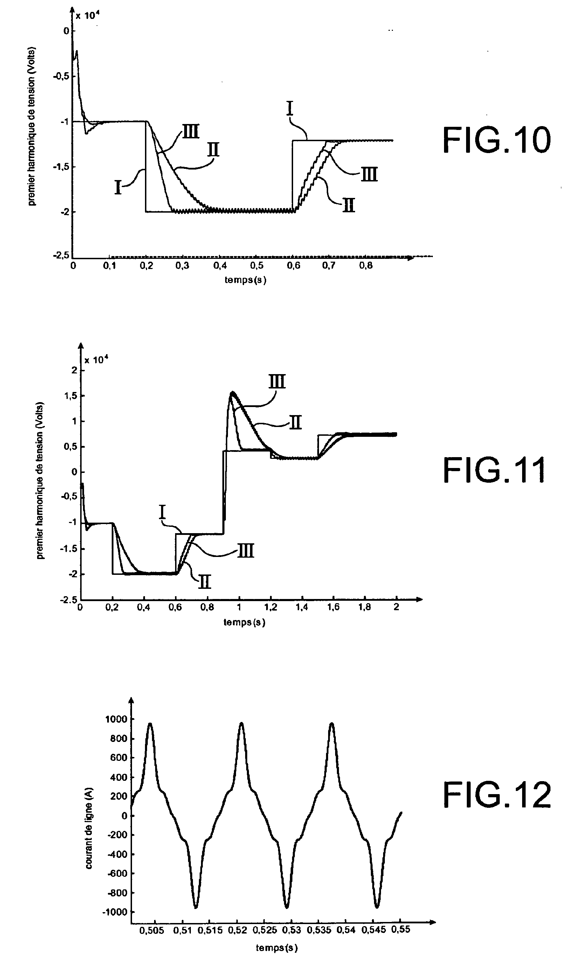

Les figures 10 à 14 illustrent des résultats comparatifs obtenus avec la loi de commande de l'art connu telle que définie dans le document référencé [2] et avec la loi de commande de l'invention.
La figure 10 illustre ainsi un fonctionnement sans harmoniques obtenu en mode capacitif avec :

- une courbe I illustrant un signal de référence,
- une courbe II obtenue avec la loi de commande du document référencé [2],
- une courbe III illustrant la loi de commande optimisée selon l'invention.

Comme cela apparait clairement sur ces courbes la dynamique de la loi de commande de l'invention est supérieure à celle de la loi de commande du document référencé [2].

La figure 11 illustre la généralisation de la loi de commande de l'invention au mode inductif, avec un fonctionnement en mode capacitif entre 0 et 0,9 secondes et un fonctionnement en mode inductif entre 0,9 secondes et 2 secondes.

La courbe II illustre la loi de commande de l'invention qui généralise la loi de commande décrite dans le document référencé [2] sur toute la plage de fonctionnement du TCSC (modes capacitif et inductif). La courbe III illustre les résultats obtenus avec la loi de commande optimisée de l'invention (avec gain variable).

La figure 12 illustre un courant de ligne comportant des harmoniques (30% d'harmonique 3, 20% d'harmonique 5 et 10% d'harmonique 7).

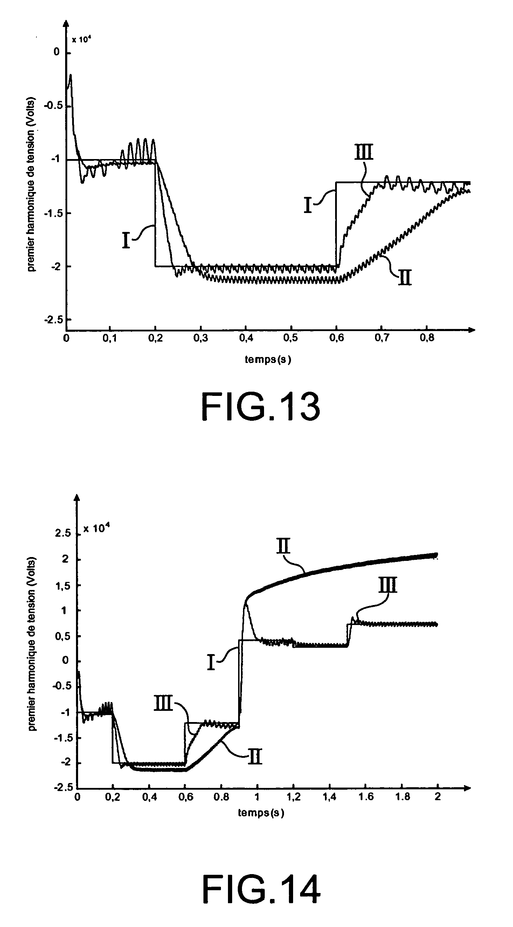

La figure 13 illustre ainsi un fonctionnement avec un tel courant de ligne, en mode capacitif. Après comparaison avec la courbe II obtenue avec le document référencé [2], il apparaît que la loi de commande optimisé de l'invention (courbe III) permet de réduire l'erreur statique et d'améliorer la dynamique (convergence plus rapide).

La figure 14 illustre un fonctionnement avec un tel courant de ligne, sur les deux modes de fonctionnement. La courbe II illustre la loi de commande de l'invention qui généralise la loi de commande décrite dans le document référencé [2] sur toute la plage de fonctionnement du TCSC. Il apparaît que les performances obtenues dans le mode inductif, dans le cas d'un taux d'harmoniques important, ne sont pas acceptables. Par contre, un fonctionnement très satisfaisant est obtenu avec la loi de commande optimisée de l'invention comme illustré sur la courbe III (gain variable).

**REFERENCES**

[1] US 5 801 459

[2] G. ESCOBAR, A. STANKOVIC, P. MATTAVELLI, R. ORTEGA, "On the linear control of TCSC" (IEEE Porto Tech Conference, 10th-13th September, Porto, 2001).

**Revendications**

1.  Système de commande d'un TCSC disposé sur une ligne haute tension (40) d'un réseau de transport d'énergie électrique, qui comprend :

    - un module de mesure de tension (41) qui permet d'extraire les harmoniques de la tension aux bornes du TCSC,
    - un module de mesure du courant (42) qui permet d'extraire l'amplitude du fondamental et éventuellement des autres harmoniques du courant circulant dans la ligne haute tension,
    - un régulateur (43) selon une loi de commande non linéaire, qui reçoit en entrée les sorties des deux modules de mesure de tension et de courant, et une tension de référence correspondant au fondamental de la tension ligne que l'on veut obtenir aux bornes du TCSC, et qui délivre une admittance effective équivalente,
    - un module (44) d'extraction de l'angle de commande selon un algorithme d'extraction qui reçoit cette admittance effective équivalente et qui délivre un angle de commande,
    - un module (45) de commande des thyristors (T1 et T2) du TCSC, qui reçoit cet angle de commande et une référence de zéro courant **caractérisé en ce que** la référence de zéro courant est délivrée par une boucle à verrouillage de phase donnant la position du courant (46),

    et **en ce que** la loi de commande est telle que :

    $$u = \frac{f(\sigma) - sign(V_1^*)|i_I|}{V_2 + sign(V_1^*)\,(V_1^* + \sigma)}$$

    Avec :

    la surface de glissement $\sigma = \tilde{V}_1 - sign(V_1^*)V_2$
    et
    f : fonction d'interpolation linéaire,

$V_1$ et $V_2$ : tensions mesurées,
$V_1^*$ *et* $V_2^*$ : tensions de référence,
$\tilde{V}_1$ *et* $\tilde{V}_2$ : erreur de poursuite de tensions.

2. Système selon la revendication 1, dans lequel l'algorithme d'extraction d'angle comprend un tableau, une modélisation ou une recherche par dichotomie.

3. Système selon la revendication 1, dans lequel on a :

$$f(\sigma) = k_1 \ \mathrm{atan}(k_2\sigma)$$

$$k_1 = \left(R|V_2| + \delta\right)$$

Avec :

$K_1$ et $k_2$ constantes de réglage positives,
$\delta > 0$,
$R = \omega_s/f(\overline{\beta}_0)$,
$\overline{\beta}_0$ : valeur à l'équilibre de $\beta_0$'
$\beta_0$ : angle de contrôle,
$\omega_s$ : pulsation du réseau.

4. Procédé de commande d'un TCSC disposé sur une ligne haute tension (40) d'un réseau de transport d'énergie électrique, qui comprend les étapes suivantes :

- une étape de mesure de tension qui permet d'extraire les harmoniques de la tension aux bornes du TCSC,
- une étape de mesure du courant qui permet d'extraire l'amplitude du fondamental et éventuellement des autres harmoniques du courant circulant dans la ligne haute tension,
- une étape de régulation selon une loi de commande non linéaire, à partir des signaux de mesure de tension et de courant, et d'une tension de référence correspondant au fondamental de la tension ligne que l'on veut obtenir aux bornes du TCSC, pour obtenir une admittance effective équivalente,
- une étape d'extraction de l'angle de commande selon un algorithme d'extraction d'angle à partir de cette admittance effective équivalente et pour obtenir un angle de commande,
- une étape de commande des thyristors (T1, T2) du TCSC à partir de cet angle de commande et d'une référence de zéro courant **caractérisé en ce que** la référence de zéro courant est délivrée par une boucle à verrouillage de phase donnant la position du courant, et **en ce que** la loi de commande est telle que :

$$u = \frac{f(\sigma) - sign(V_1^*)|i_l|}{V_2 + sign(V_1^*) \ (V_1^* + \sigma)}$$

Avec :

la surface de glissement $\sigma = \tilde{V}_1\text{-}sign \ (V^*_1)V_2$
et
f : fonction d'interpolation linéaire,
$V_1$ et $V_2$ : tensions mesurées,
$V_1^*$ *et* $V_2^*$ : tensions de référence,
$\tilde{V}_1$ *et* $\tilde{V}_2$ : erreur de poursuite de tensions.

5. Procédé selon la revendication 4, dans lequel l'algorithme d'extraction d'angle est obtenu en utilisant un tableau, une modélisation ou une recherche par dichotomie.

**6.** Procédé selon la revendication 4, dans lequel la loi de commande est déterminée par une approche modes glissants.

**7.** Procédé selon la revendication 4, dans lequel on a :

$$f(\sigma) = k_1 \; \mathrm{atan}(k_2\sigma)$$

$$k_1 = \left(R|V_2| + \delta\right)$$

Avec :

$K_1$ et $k_2$ constantes de réglage positives,
$\delta > 0$,

$$R \; = \; \omega_s / f \, (\overline{\beta}_0) \, ,$$

$\overline{\beta}_0$ : valeur à l'équilibre de $\beta_0$,
$\beta_0$ : angle de contrôle,
$\omega_s$ : pulsation du réseau.

**Claims**

**1.** A control system for a TCSC disposed on a high voltage line (40) of an electrical transmission network, which comprises:

· a voltage measuring module (41) which enables the harmonics of the voltage across the TCSC to be extracted;
· a current measuring module (42) which enables the amplitude of the fundamental, and any other harmonics, of the current flowing in the high voltage line to be extracted;
· a regulator (43) working in accordance with a non-linear control law, which receives as input the output signals from the two modules measuring voltage and current, and a reference voltage corresponding to the fundamental of the line voltage which is required to be obtained across the TCSC, the regulator delivering an equivalent effective admittance;
· a module (44) for extracting the control angle in accordance with an extraction algorithm which receives the said equivalent effective admittance and which delivers a control angle;
· a module (45) for control of the thyristors (T1 and T2) of the TCSC, which receives the said control angle and a zero current reference, **characterized in that** the zero current reference is delivered by a phase-locked loop giving the position of the current (46),

and **in that** the control law is such that :

$$\Lambda = \frac{f(\sigma) - sign(V_1^*)|i_l|}{V_2 + sign(V_1^*)\,(V_1^* + \sigma)}$$

where :

the sliding surface $\sigma = \tilde{V}_1 - sign\,(V_1{}^*)V_2$ and
$\underline{f}$ : a linear interpolation function;
$V_1$ and $V_2$ : measured voltages;
$V_1{}^*$ and $V_2{}^*$ : reference voltages,

$\tilde{V}_1$ and $\tilde{V}_2$ : voltage following error.

2. A system according to claim 1, wherein the algorithm for extraction of the angle comprises a table, or a modelling process, or a binary search.

3. A system according to Claim 1, wherein:

$$f(\sigma) = k_1 \, \mathrm{atan}(k_2\sigma)$$

$$k_1 = \left(R|V_2| + \delta\right)$$

where:

$k_1$ and $k_2$ are positive adjustment constants;
$\delta > 0$;

$$R = \omega_s / f(\bar{\beta}_0) \,;$$

$\bar{\beta}_0$ : equilibrium value of $\beta_0$ ;
$\beta_0$ : control angle;
$\omega_s$: frequency of the network.

4. A method of control of a TCSC disposed on a high voltage line (40) of an electrical transmission network, which comprises the following steps:

· a voltage measuring step which enables the harmonics of the voltage across the TCSC to be extracted;
· a current measuring step which enables the amplitude of the fundamental and, optionally, those of any other harmonics in the current flowing in the high voltage line to be extracted;
· a step of regulation in accordance with a non-linear control law, making use of the voltage and current measuring signals and a voltage reference signal corresponding to the fundamental of the line voltage that is required to be obtained across the TCSC, whereby to obtain an equivalent effective admittance;
· a step of extracting the control angle in accordance with an angle extraction algorithm, using the said equivalent effective admittance whereby to obtain a control angle;
· a step of controlling the thyristors (T1, T2) of the TCSC, using the said control angle together with a zero current reference, **characterized in that** the zero current reference is delivered by a phase-locked loop giving the position of the current,

and **in that** the control law is such that:

$$u = \frac{f(\sigma) - sign(V_1^*)|i_l|}{V_2 + sign(V_1^*)\,(V_1^* + \sigma)}$$

where :

the sliding surface $\sigma = \tilde{V}_1 - sign\ (V^*{}_1)V_2$ and
f : a linear interpolation function;
$V_1$ and $V_2$ : measured voltages;
$V_1^*$ and $V_2^*$ : reference voltages,
$\tilde{V}_1$ and $\tilde{V}_2$ : voltage following error.

**5.** A method according to claim 4, wherein the angle extraction algorithm is obtained by using a table, a modeling process, or a binary search.

**6.** A method according to claim 4, wherein the control law is determined from an approach making use of sliding modes.

**7.** A method according to Claim 4, wherein:

$$f(\sigma) = k_1 \ \mathrm{atan}(k_2 \sigma)$$

$$k_1 = \left( R|V_2| + \delta \right)$$

where:

$k_1$ and $k_2$ are positive adjustment constants;
$\delta > 0$;

$$R \ = \ \omega_s / f(\bar{\beta}_0) \ ;$$

$\bar{\beta}_0$ : equilibrium value of $\beta_0$ ;
$\beta_0$ : control angle;
$\omega_s$ : frequency of the network.

**Patentansprüche**

**1.** System zum Steuern eines thyristorgesteuerten Reihenkondensators (TCSC), der an einer Hochspannungsleitung (40) eines Stromübertragungsnetzes angeordnet ist, enthalten:

- ein Spannungsmessmodul (41), mit dem an den Anschlussklemmen des TCSC die Oberschwingungen aus der Spannung extrahiert werden könnten,
- ein Strommessmodul (42), mit dem die Amplitude der Grundschwingung und gegebenenfalls weiterer flberschwingungen aus dem in der Hochspannungsleitung fließenden Strom extrahiert werden kann,
- einen Regler (43) gemäß einem nichtlinearen Steuerungsgesetz, der am Eingang die Ausgänge der beiden Spannungs- bzw. Strommessmodule sowie eine Bezugsspannung empfängt, die der Grundschwingung der Leitungsspannung entspricht, die an den Anschlussklemmen der TCSC erhalten werden soll, und die eine äquivalent effektive Admittanz ausgibt,
- ein Modul (44) zur Extraktion des Steuerwinkels nach einem Extraktionsalgorithmus, das diese äquivalente effektive Admittanz empfängt und einen Steuerwinkel ausgibt,
- ein Modul (45) zum Steuern der Thyristoren (T1 und T2) der TCSC, das diesen Steuerwinkel und eine Nullstromreferenz empfängt,

**dadurch gekennzeichnet, dass** die Nullstromreferenz von einer Phasenregelschleife ausgegeben wird, welche die Stromstellung (46) angibt,
und dass das Steuerungsgesetz wie folgt lautet:

$$u = \frac{f(\sigma) - sign(V_1^*)|i_l|}{V_2 + sign(V_1^*)(V_1^* + \sigma)}$$

mit der Gleitfläche $\sigma = \tilde{V}_1 - sign(V_1^*)V_2$
und

f: lineare Interpolationsfunktion
$V_1$ und $V_2$: gemessene Spannungen
$V_1$* und V2*: Bezugsspannungen
$\tilde{V}_1$ und $\tilde{V}_2$: Schleppfehler von Spannungen.

2.  System nach Anspruch 1, wobei der Winkelextraktionsalgorithmus eine Tabelle, eine Modellbildung oder eine Ermittlung durch Dichotomie umfasst.

3.  System nach Anspruch 1, wobei gilt:

$$f(\sigma) = k_1 \operatorname{atan}(k_2 \sigma)$$

$$k_1 = (R|V_2| + \delta)$$

mit:

K1 und k2 positive Einstellkonstanten
$\delta < 0$

$$R = \omega_s / f(\overline{\beta}_0)$$

$\overline{\beta}_0$ : Wert bei ausgeglichenem $\beta_0$
$\beta_0$: Kontrollwinkel
$\omega_s$: Netzkreisfrequenz.

4.  Verfahren zum Steuern eines TCSC, der an einer Hochspannungsleitung (40) eines Stromübertragungsnetzes angeordnet ist, das folgende Schritte umfasst:

    - Schritt zum Messen der Spannung, mit dem an den Anschlussklemmen des TCSC die Oberschwingungen aus der Spannung extrahiert werden könnten,
    - Schritt zum Messen des Stroms, mit dem die Amplitude der Grundschwingung und gegebenenfalls weiterer Oberschwingungen aus dem in der Hochspannungsleitung fließenden Strom extrahiert werden kann,
    - Schritt zum Regeln gemäß einem nichtlinearen Steuerungsgesetz, ausgehend von Spannung- und Strommesssignalen und einer Bezugsspannung, die der Grundschwingung der Leitungsspannung entspricht, die an den Anschlussklemmen des TCSC erhalten werden soll, um eine äquivalente effektive Admittanz zu erhalten,
    - Schritt zur Extraktion des Steuerwinkels nach einem Winkelextraktionsalgorithmus ausgehend von dieser äquivalenten effektive Admittanz und zum Erhalten eines Steuerwinkels,
    - Schritt zum Steuern der Thyristoren (T1, T2) des TCSC ausgehend von diesem Steuerwinkel und einer Nullstromreferenz,

    **dadurch gekennzeichnet, dass** die Nullstromreferenz von einer Phasenregelschleife ausgegeben wird, welche die Stromstellung angibt, und dass das Steuerungsgesetz wie folgt lautet:

$$u = \frac{f(\sigma) - sign(V_1^*)|i_l|}{V_2 + sign(V_1^*)(V_1^* + \sigma)}$$

mit der Gleitfläche $\sigma = \tilde{V}_1 - sign(V_1^*)V_2$
und
f: lineare Interpolationsfunktion
$V_1$ und $V_2$: gemessene Spannungen

$V_1$* und $V_2$*: Bezugsspannungen
$\tilde{V}_1$ und $\tilde{V}_2$: Schleppfehler von Spannungen.

5. Verfahren nach Anspruch 4, wobei der Winkelextraktionsalgorithmus unter Anwendung einer Tabelle, einer Modellbildung oder einer Ermittlung durch Dichotomie erhalten wird.

6. Verfahren nach Anspruch 4, wobei das Steuerungsgesetz durch gleitende Annäherung bestimmt wird.

7. Verfahren nach Anspruch 4, wobei gilt:

$$f(\sigma) = k_1 \operatorname{atan}(k_2\sigma)$$

$$k_1 = (R|\,V_2\,| + \delta)$$

mit:

K1 und k2 positive Einstellkonstanten
$\delta < 0$

$$R = \omega_s / f(\overline{\beta}_0)$$

$\overline{\beta_0}$ : Wert bei ausgeglichenem $\beta_0$
$\beta_0$: Kontrollwinkel
$\omega_s$: Netzkreisfrequenz.

FIG.1

FIG.2

28

FIG.3

FIG.4

FIG.5

FIG.6

FIG.7

EP 2 158 657 B1

FIG.8

FIG.9

FIG.10

FIG.11

FIG.12

FIG.13

FIG.14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5801459 A

**Littérature non-brevet citée dans la description**

- **G. ESCOBAR ; A. STANKOVIC ; P. MATTAVELLI ;**
**R. ORTEGA.** On the linear control of TCSC. *IEEE Porto Tech Conference,* 20010910